# EUROPÄISCHE PATENTSCHRIFT

(11) **EP 2 821 941 B1**
(45) Veröffentlichungstag und Bekanntmachung des Hinweises auf die Patenterteilung: **25.10.2017**
(21) Anmeldenummer: 14001733.6
(22) Anmeldetag: 15.05.2014
(51) Int. Cl.: G06K 19/077

(54) **Verfahren zum Herstellen eines tragbaren Datenträgers mit Chip**
Method for producing a portable data carrier with chip
Procédé de fabrication d'un support de données portable doté d'une puce

(30) Priorität: 02.07.2013 DE 102013011060
(43) Veröffentlichungstag der Anmeldung: 07.01.2015
(73) Patentinhaber: Giesecke+Devrient Mobile Security GmbH, 81677 München (DE)
(72) Erfinder: Tarantino, Thomas, 83410 Laufen (DE); Griesmeier, Robert, 83052 Bruckmühl, OT Heufeldmühle (DE)

(56) Entgegenhaltungen:
- DE-A1- 4 435 802
- DE-A1- 19 844 965
- FR-A1- 2 624 999
- US-A1- 2005 104 732

## Beschreibung

Die vorliegende Erfindung beschreibt ein Verfahren zur Herstellung eines tragbaren Datenträgers mit Chip, z.B. einer Chipkarte oder einer SIM-Karte.

Aus dem Stand der Technik ist die Herstellung von tragbaren Datenträgern bekannt, in die ein Chipmodul eingebaut wird. Die Datenträger weisen je nach Anwendung auch eine Antennenspule für eine kontaktlose Kommunikation auf.

DE 198 44 965 A1 beschreibt ein Chipkartenmodul, in welchem ein in einem Gehäuse angeordneter Halbleiterchip über die aus dem Gehäuse herausgeführten Anschlüsse mit den Kontaktflächen des Chipkartenmoduls elektrisch leitend kontaktiert ist. Erfindungsgemäß ist zwischen dem Gehäuse und den Kontaktflächen im Bereich oberhalb des Halbleiterchips eine Schutzschicht angeordnet, die den Halbleiterchip vor mechanischer Beschädigung schützt. Die Erfindung betrifft weiterhin eine dieses Chipkartenmodul umfassende Chipkarte sowie ein Verfahren zur Herstellung einer Chipkarte.

US 2005/104732 A1 beschreibt einen Transponder, der einen Chip und eine Antenne umfasst, wobei der Chip mit der Antenne verbunden ist, wobei sich der Transponder dadurch auszeichnet, dass der Chip mit einer Schutz- und Isolierschicht von mindestens 30 mm Dicke umhüllt ist, wobei die Schicht zumindest zwischen dem Chip und der Antenne angeordnet ist, wobei die Antenne mit dem Chip durch die Schicht hindurch verbunden ist.

FR 2 624 999 A1 beschreibt die Herstellung von Chipkarten. Bei einer Verbiegung oder Verwindung einer Kreditkarte besteht die Gefahr, dass ein Chip aus der Vertiefung gezogen wird. Um dieses Risiko zu begrenzen, schlägt die Erfindung vor, dass die vorher beschriebenen Belastungen durch Verbiegung und Verwindung auf die Umgebung der Vertiefung verteilt werden. Dazu werden die Ränder der Vertiefung gehärtet.

DE 44 35 802 A1 beschreibt einen Kartenkörper eines Datenträgers mit darin angeordneten Elementen, wie beispielsweise einem elektronischen Modul, der in einer Pressvorrichtung aus einer verpressten Formmasse hergestellt wird. Vorzugsweise werden diejenigen Elemente, die in den Kartenkörper eingebettet werden sollen, bereits vor dem Pressvorgang in die Pressvorrichtung eingebracht und dort positioniert und fixiert.

Nachteilig am Stand der Technik ist, dass Chipmodule getrennt von der Herstellung eines Datenträgers produziert werden. Beim Einbau von Chipmodulen in einen Datenträger sind deren elektrische Kontakte sichtbar und werden im optischen Eindruck des Datenträgers oft als störend empfunden.

Ausgehend von den Nachteilen des Stands der Technik ist es Aufgabe der Erfindung eine Lösung für eine Integration der Herstellung von Chipmodulen in die Herstellung von Datenträgern zur Verfügung zu stellen, welche die Nachteile des Stands der Technik vermeidet.

Die Aufgabe der Erfindung wird durch den unabhängigen Anspruch 1 gelöst. Vorteilhafte Ausführungen sind in den abhängigen Ansprüchen beschrieben.

Ein vorteilhaftes Ausführungsbeispiel der Erfindung ist, dass ein Zwischenraum zwischen dem mindestens einen Kontakt und dem Datenträgerkörper mit einem elektrisch isolierenden Material ausgefüllt wird. Vorteilhafterweise entsteht so eine ebene Oberfläche mit der Oberfläche des Datenträgerkörpers.

Ein weiteres vorteilhaftes Ausführungsbeispiel der Erfindung ist, dass der Datenträgerkörper mittels eines Laminierungsverfahrens oder eines Spritzgussverfahrens hergestellt wird. Vorteilhafterweise ist die vorliegende Erfindung auch für sogenannte Inline-Verfahren geeignet, in welchen von mindestens einer Rolle das notwendige Folienmaterial zur Verfügung gestellt wird und die Folie nach dem Verfahren wieder aufgerollt wird oder aus der verarbeiteten Folie Datenträger ausgestanzt werden.

Ein weiteres vorteilhaftes Ausführungsbeispiel der Erfindung ist, dass die Vertiefung vor oder während oder nach der Herstellung des Datenträgerkörpers hergestellt wird.

Ein weiteres vorteilhaftes Ausführungsbeispiel der Erfindung ist, dass vor der Herstellung des Datenträgerkörpers mittels Laminierung die Vertiefung hergestellt wird, indem einzelne Folien im Bereich der Vertiefung vor der Laminierung ausgestanzt werden.

Ein weiteres vorteilhaftes Ausführungsbeispiel der Erfindung ist, dass vor der Herstellung des Datenträgerkörpers mittels Laminierung die Vertiefung hergestellt wird, indem ein verwendetes Laminierblech eine Erhebung in Form der Vertiefung aufweist und diese Erhebung bei einem Laminiervorgang in mindestens eine Folie einpresst.

Ein weiteres vorteilhaftes Ausführungsbeispiel der Erfindung ist, dass die Vertiefung mittels eines geheizten Stempels, eines Lasers oder einer Fräse hergestellt wird.

Ein weiteres vorteilhaftes Ausführungsbeispiel der Erfindung ist, dass die äußeren Abmessungen des Chips einschließlich der Kontakte maximal den Abmessungen der Vertiefung entsprechen. Alternativ ist es möglich für eine besonders feste Anordnung des Chips im Datenträgerkörper im Sinne einer Presspassung die Vertiefung etwas kleiner als den Chip und die Kontakte auszubilden. Beim Einpressen des Chips und der Kontakte wird das Material des Datenträgerkörpers verpresst.

Ein weiteres vorteilhaftes Ausführungsbeispiel der Erfindung ist, dass vor dem Einsetzen des Chips ein Klebstoff in die Vertiefung eingespendet oder auf den Chip aufgetragen wird, um den Chip im Datenträgerkörper zu fixieren.

Ein weiteres vorteilhaftes Ausführungsbeispiel der Erfindung ist, dass eine Oberfläche des mindestens einen Kontakts in einer Ebene mit der Oberfläche des Datenträgerkörpers liegt oder unter oder über der Oberfläche des Datenträgerkörpers liegt.

Ein weiteres vorteilhaftes Ausführungsbeispiel der Erfindung ist, dass ein Zwischenraum zwischen mindestens einem Kontakt und dem Datenträgerkörper mit einem isolierenden Material so ausgefüllt wird, dass eine ebene Oberfläche mit der Oberfläche des Datenträgerkörpers entsteht. Vorteilhafterweise wird zum Ausfüllen des Zwischenraums ein transparenter, elektrisch isolierender Schutzlack verwendet.

Ein weiteres vorteilhaftes Ausführungsbeispiel der Erfindung ist, dass eine Antennenspule auf den Datenträgerkörper gedruckt wird.

Neben dem oben beschriebenen Verfahren offenbart die Erfindung entsprechend eine Chipkarte, welche gemäß dem oben beschriebenen Verfahren hergestellt wurde.

Im Folgenden wird die Erfindung anhand der beigefügten Figuren detailliert beschrieben.
Figur 1 zeigt eine Seitenansicht eines Chips mit erfindungsgemäßen Schichten, welche auf Kontakten des Chips angeordnet sind.
Figur 2 zeigt eine Draufsicht eines Chips mit erfindungsgemäßen Schichten, welche auf Kontakten des Chips angeordnet sind.
Figur 3 zeigt in einer Seitenansicht die Herstellung einer Vertiefung in einem Datenträgerkörper um den Chip und die Kontakte in die Vertiefung einzusetzen.
Figur 4 zeigt in einer Seitenansicht den prinzipiellen Aufbau eines erfindungsgemäßen Datenträgers mit vertieften Kontakten.

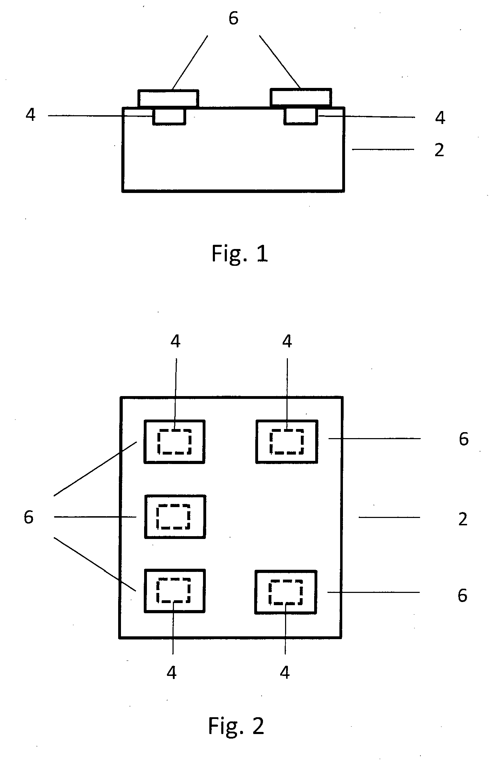

Figur 1 zeigt eine Seitenansicht eines Chips 2 mit erfindungsgemäßen Schichten 6, welche auf Kontakten 4 des Chips 2 angeordnet sind. Wesentlich für die Erfindung ist, dass die Kontakte 4 des Chips 2 vergrößert werden durch die Schichten 6. Die im Stand der Technik üblichen Chipanschlüsse 4 mit einer Kantenlänge von z.B. ca. 90 Mikrometern sind für die folgenden erfindungsgemäßen Produktionsschritte zu klein, da sonst während des Herstellungsverfahrens sehr kleine Positionstoleranzen eingehalten werden müssten, was zu einem Anstieg der Kosten führen würde. Auf die Kontakte 4 werden mittels eines geeigneten Verfahrens, z.B. einem Druckverfahren, die Schichten 6 aufgetragen. Die Schichten 6 bestehen aus einem elektrisch leitfähigen Material. Die Fläche der Schichten 6 ist größer als die Fläche der Kontakte 4.

Figur 2 zeigt eine Draufsicht auf den Chip 2 mit erfindungsgemäßen Schichten 6, welche auf den Kontakten 4 des Chips 2 angeordnet sind. Hier ist gut zu erkennen, dass die Schichten 6 über den Kontakten 4, welche gestrichelt dargestellt sind, angeordnet sind und dass die Fläche der Schichten 6 größer ist als die Fläche der Kontakte 4. Fläche und Form der Kontakte 4 sind hier nur beispielhaft dargestellt.

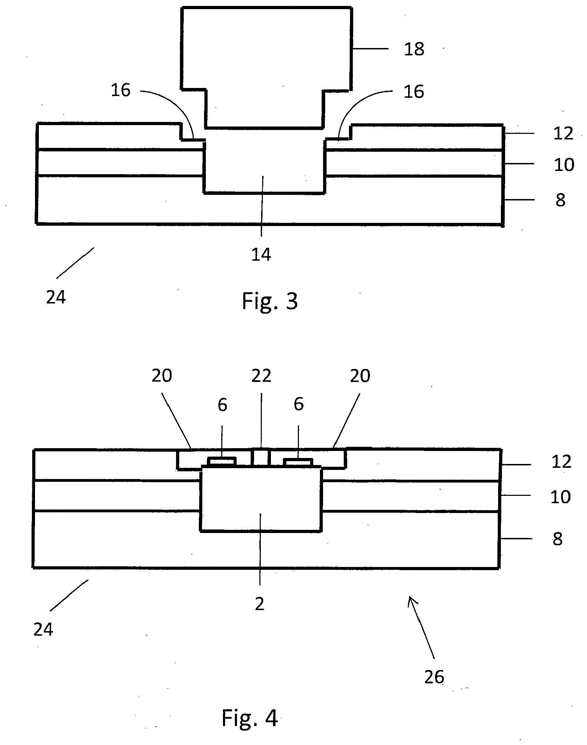

Figur 3 zeigt in einer Seitenansicht die Herstellung einer Vertiefung 14 in einem Datenträgerkörper 24 um den Chip 2 in die Vertiefung 14 einzusetzen. Der Datenträgerkörper 24 wird beispielsweise mittels eines Laminationsverfahrens hergestellt. Alternativ kann der Datenträgerkörper 24 auch mittels eines Spritzgussverfahrens hergestellt werden. Der Datenträgerkörper 24 besteht in dem Beispiel von Figur 3 aus einer opaken oder transparenten Kernschicht 8. Die Kernschicht 8 kann aus mehreren Folienschichten aufgebaut sein. Auf der Kernschicht 8 ist zumindest auf einem Teil der Oberfläche der Kernschicht 8 ein Designdruck 10 angeordnet. Über dem Designdruck 10 befindet sich eine transparente Overlayfolie 12 oder eine transparente Lackschicht. Auf der anderen Seite der Kernschicht 8 können ein weiterer Designdruck und eine weitere Overlayfolie angeordnet sein, welche aber in Figur 3 aus Gründen der Übersichtlichkeit nicht dargestellt wurden.

Um im Datenträgerkörper 24 den Chip 2 und dazugehörige auf der Außenseite des Datenträgerkörpers 24 liegende Kontakte 20 anzuordnen, wird mittels beispielsweise eines beheizten Stempels 18 eine Vertiefung 14 und ein vertiefter Bereich 16 für die Kontakte 20 im Datenträgerkörper 24 hergestellt.

Der beheizte Stempel 18 wird in den Datenträgerkörper 24 gedrückt und verdrängt dabei das Material des Datenträgerkörpers 24. Im vertieften Bereich 16, wo die zukünftigen außenliegenden Kontakte 20 angeordnet werden und welcher in der Overlayschicht 12 angeordnet ist, sollte idealerweise etwas Material der Overlayfolie 12 über dem Designdruck 10 bestehen bleiben, um den Designdruck 10 zu schützen. Der Chip 2 wird in die Vertiefung 14 eingesetzt. Die Vertiefung 14 und der vertiefte Bereich 16, welche durch beispielsweise den beheizten Stempel 18 geschaffen werden, entsprechen in ihren Abmessungen den Abmessungen des einzusetzenden Chips 2 und der auf der Außenseite des Datenträgerkörpers 24 anzuordnenden Kontakte 20. Die Abmessungen der Vertiefung 14 und des vertieften Bereichs 16 können aber auch geringfügig größer sein, um ein Einsetzen des Chips 2 und der auf der Außenseite des Datenträgerkörpers 24 liegenden Kontakte 20 zu erleichtern. Für eine Presspassung sind die Abmessungen der Vertiefung 14 und des vertieften Bereichs 16 kleiner als die Abmessungen des Chips 2 und der Kontakte 20, um Chip 2 und Kontakte 20 möglichst fest anzuordnen. Alternativ kann die Vertiefung 14 und der vertiefte Bereich 16 auch mittels eines Fräsvorgangs oder mittels eines Lasers hergestellt werden. Als weitere Alternative kann die Vertiefung 14 und der vertiefte Bereich 16 hergestellt werden, indem vor einer Laminierung von einzelnen Folien, aus denen der Datenträgerkörper 24 aufgebaut wird, in den einzelnen Folien jeweils im Bereich der zukünftigen Vertiefung 14 oder des vertieften Bereichs 16 eine Öffnung hergestellt wird, z.B. ausgestanzt wird. Als eine weitere Alternative kann die Vertiefung 14 und der vertiefte Bereich 16 hergestellt werden, indem ein bei einer Laminierung verwendetes Laminierblech eine Erhebung in Form einer Vertiefung 14 und eines vertieften Bereichs 16 aufweist und diese Erhebung beim Laminiervorgang in mindestens eine Folie einpresst. Alternativ kann die Vertiefung 14 getrennt von dem vertieften Bereich 16 hergestellt werden, bzw. die Vertiefung 14 und der vertiefte Bereich 16 können mit unterschiedlichen Verfahren hergestellt werden.

Figur 4 zeigt in einer Seitenansicht den prinzipiellen Aufbau eines erfindungsgemäßen Datenträgers 26. Im Datenträgerkörper 24 ist der Chip 2 in die vorher hergestellte Vertiefung 14 eingesetzt, wobei die Herstellung der Vertiefung 14 und des vertieften Bereichs 16 in der Overlayfolie 12 für die Kontakte 20 in Figur 3 beschrieben ist. Um den Chip 2 in der Vertiefung 14 zu fixieren, kann vor dem Einsetzen des Chips 2 ein Klebstoff in die Vertiefung eingespendet werden, welcher den Chip 2 dauerhaft mit dem Datenträgerkörper 24 verbindet oder nur vorübergehend fixiert. In Figur 4 ist ein Ausführungsbeispiel dargestellt, in welchem die Kontakte 20 in den vertieften Bereich 16 in der Overlayfolie 12 eingesetzt sind, so dass die Kontakte 20 mit der Overlayfolie 12 auf der Außenseite des Datenträgerkörpers 24 eine ebene Fläche bilden. Alternativ ist es möglich, dass in der Overlayfolie 12 kein vertiefter Bereich 16 für die Kontakte 20 ausgebildet wird. In diesem Fall werden die Kontakte 20 auf der Oberfläche der Overlayfolie 12 angeordnet. Die Kontakte 20 bilden dann mit der Overlayfolie 12 keine ebene Fläche auf der Außenseite des Datenträgerkörpers 24. Dieses alternative Ausführungsbeispiel ist nicht dargestellt. In Figur 4 sind die Schichten 6 in der Höhe des vertieften Bereichs 16 angeordnet. Die Kontakte 20 sind im vertieften Bereich 16 so angeordnet, dass sie mit den Anschlüssen 6 des Chips 2 eine elektrisch leitende Verbindung haben und mit der Overlayfolie 12 eine ebene Fläche auf der Außenseite des Datenträgerkörpers 24 bilden.1 Die Kontakte 20 werden mit einem elektrisch leitenden Material hergestellt, welches z.B. im Siebdruck, lithografischen Prozess, Tampondruck oder mit einer Dosier- oder Sprühtechnik verarbeitet werden kann. Alternativ besteht das Material der Kontakte 20 aus einem transparenten und elektrisch leitfähigen Material. Dann ist durch die Kontakte 20 hindurch der Designdruck 10 von außen zu erkennen. Nach der Herstellung der Kontakte 20 wird zwischen den Kontakten 20 ein elektrisch isolierendes Material 22 aufgebracht, z.B. ein Schutzlack. Der Schutzlack ist beispielsweise transparent, damit der darunter liegende Designdruck von außen zu erkennen ist. Der Schutzlack 22 isoliert die Kontakte 20 gegeneinander. Ferner dient der Schutzlack 22 dazu, dass alle Öffnungen zum Chip 2 hin verschlossen werden. Der Schutzlack 22 und die Kontakte 20 bilden mit der umgebenden Oberfläche des Datenträgerkörpers 24 eine ebene Fläche, wenn sich die Kontakte 20 vertieft in der Overlayfolie 12 befinden, wie in Figur 3 dargestellt. Liegen die Kontakte 20 auf der Overlayfolie 12, dann entsteht entsprechend keine ebene Fläche. Die Kontakte 20 können beispielsweise als sogenannte ISO-Kontakte gemäß ISO 7816 ausgeführt sein.

Alternativ kann für einen Chip, welcher für eine kontaktlose als auch kontaktgebundene Kommunikation eingerichtet ist, eine Antennenspule z.B. in der transparenten Overlayfolie 12 eingebracht werden, was nicht dargestellt ist. Um einen Kurzschluss zu vermeiden, sollte über der Antennenspule ein isolierender Lack aufgebracht werden.

Die vorliegende Erfindung ermöglicht eine kostengünstige Produktion von tragbaren Datenträgern, z.B. Smartcards, für kontaktgebundene und/oder kontaktlose Kommunikation, wie z.B. Dual-Interface-Karten. Ferner kann ein Design für den Datenträger unabhängig vom Chipmodul entworfen werden, da das Chipmodul, insbesondere dessen außenliegenden Kontakte kaum auffallen bzw. in das Design einfach integriert werden können. Darüber hinaus lässt sich die vorliegende Erfindung vorteilhaft in einem Rolle-zu-Rolle-Verfahren einsetzen.

### Bezugszeichenliste

- 2: erfindungsgemäß vorbereiteter Chip
- 4: Kontakte des Chips
- 6: erfindungsgemäß auf die Kontakte 4 aufgebrachte Schicht
- 8: Kernschicht des Datenträgerkörpers 24
- 10: Designdruck
- 12: transparente Overlayfolie, alternativ ein Lack
- 14: Vertiefung für den Chip 2
- 16: vertiefter Bereich in der Overlayfolie 12 für die Kontakte 20
- 18: beheizter Stempel
- 20: Kontakte auf der Außenseite des Datenträgerkörpers
- 22: Schutzlack
- 24: Datenträgerkörper
- 26: erfindungsgemäßer Datenträger

## Patentansprüche

1. Verfahren zur Herstellung eines tragbaren Datenträgers (26) mit einem Chip (2), wobei
- ein Datenträgerkörper (24) hergestellt wird,
- mindestens eine Vertiefung (14) im Datenträgerkörper (24) hergestellt wird,
- der Chip (2) in die Vertiefung (14) eingesetzt wird,
- mindestens ein Kontakt (20) hergestellt wird, welcher sich an der Oberfläche des Datenträgerkörpers (24) befindet und jeweils ein Kontakt (20) eine elektrisch leitende Verbindung mit jeweils einer auf dem Chip (2) aufgetragenen elektrisch leitenden Schicht (6) hat, auf der der Kontakt (20) angeordnet ist, wobei zwischen den Anschlüssen des Chips (2) keine elektrisch leitende Verbindung besteht
**gekennzeichnet durch die Schritte, dass**
- auf der Oberfläche des Chips (2) mindestens eine elektrisch leitende Schicht (6) über mindestens einem Anschluss (4) des Chips (2) aufgetragen wird, so dass zwischen der aufgetragenen Schicht (6) und dem Anschluss (4) des Chips (2) eine elektrisch leitende Verbindung besteht, wobei die Fläche der aufgetragenen Schicht (6) größer ist als die Fläche des Anschlusses (4) des Chips (2), wobei zwischen den Anschlüssen (4) des Chips (2) an der Oberfläche keine elektrisch leitende Verbindung besteht,
- wobei der an der Oberfläche des Datenträgerkörpers (24) liegende mindestens eine Kontakt (20) mittels eines Siebdrucks oder eines Tampondrucks oder einer Sprühtechnik oder eines lithographischen Verfahrens oder eines Abscheidungsprozesses hergestellt wird,
- wobei das Material zur Herstellung des mindestens einen Kontakts (20) transparent und elektrisch leitfähig ist.

2. Verfahren nach Anspruch 1, **dadurch gekennzeichnet, dass** ein Zwischenraum zwischen dem mindestens einen Kontakt (20) und dem Datenträgerkörper (24) mit einem elektrisch isolierenden Material (22) ausgefüllt wird.

3. Verfahren nach Anspruch 1 oder 2, **dadurch gekennzeichnet, dass** der Datenträgerkörper (24) mittels eines Laminierungsverfahrens oder eines Spritzgussverfahrens hergestellt wird.

4. Verfahren nach einem der Ansprüche 1 bis 3, **dadurch gekennzeichnet, dass** die Vertiefung (14) vor oder während oder nach der Herstellung des Datenträgerkörpers (24) hergestellt wird.

5. Verfahren nach Anspruch 4, **dadurch gekennzeichnet, dass** vor der Herstellung des Datenträgerkörpers (24) mittels Laminierung die Vertiefung (14) hergestellt wird, indem einzelne Folien im Bereich der Vertiefung (14) vor der Laminierung ausgestanzt werden.

6. Verfahren nach Anspruch 4, **dadurch gekennzeichnet, dass** vor der Herstellung des Datenträgerkörpers (24) mittels Laminierung die Vertiefung (14) hergestellt wird, indem ein verwendetes Laminierblech eine Erhebung in Form der Vertiefung (14) aufweist und diese Erhebung beim Laminiervorgang in mindestens eine Folie einpresst.

7. Verfahren nach Anspruch 4 oder 5, **dadurch gekennzeichnet, dass** die Vertiefung (14) mittels eines geheizten Stempels (18), eines Lasers oder einer Fräse hergestellt wird.

8. Verfahren nach einem der vorhergehenden Ansprüche, **dadurch gekennzeichnet, dass** die äußeren Abmessungen des Chips (2) einschließlich der Kontakte (20) maximal den Abmessungen der Vertiefung (14) entsprechen.

9. Verfahren nach einem der vorhergehenden Ansprüche, **dadurch gekennzeichnet, dass** vor dem Einsetzen des Chips (2) ein Klebstoff in die Vertiefung (14) eingespendet oder auf den Chip (2) aufgetragen wird, um den Chip (2) im Datenträgerkörper (24) zu fixieren.

10. Verfahren nach einem der vorhergehenden Ansprüche, **dadurch gekennzeichnet, dass** eine Oberfläche des mindestens einen Kontakts (20) in einer Ebene mit der Oberfläche des Datenträgerkörpers (24) liegt oder unter oder über der Oberfläche des Datenträgerkörpers (24) liegt.

11. Verfahren nach einem der vorhergehenden Ansprüche, **dadurch gekennzeichnet, dass** ein Zwischenraum zwischen mindestens einem Kontakt (20) und dem Datenträgerkörper (24) mit einem isolierenden Material (22) so ausgefüllt wird, dass eine ebene Oberfläche mit der Oberfläche des Datenträgerkörpers (24) entsteht.

12. Verfahren nach einem der vorhergehenden Ansprüche, **dadurch gekennzeichnet, dass** eine Antennenspule auf den Datenträgerkörper (24) gedruckt wird.

13. Chipkarte (26), welche gemäß einem Verfahren nach Anspruch 1 bis 12 hergestellt wurde.

## Claims

1. A method for producing a portable data carrier (26) with a chip (2), wherein
- a data carrier body (24) is produced,
- at least one recess (14) in the data carrier body (24) is produced,
- the chip (2) is inserted into the recess (14),
- at least one contact (20) is produced, which is disposed on the surface of the data carrier body (24) and one contact (20) in each case has an electroconductive connection with respectively one electroconductive layer (6) applied to the chip (2), on which electroconductive layer the contact (20) is arranged, wherein there is no electroconductive connection between the connectors of the chip (2),
**characterized by** the steps that
- to the surface of the chip (2) at least one electroconductive layer (6) is applied over at least one connector (4) of the chip (2), so that between the applied layer (6) and the connector (4) of the chip (2) there is an electroconductive connection, wherein the area of the applied layer (6) is larger than the area of the connector (4) of the chip (2), wherein between the connectors (4) of the chip (2) on the surface there is no electroconductive connection,
- wherein the at least one contact (20) disposed on the surface of the data carrier body (24) is produced by means of screen printing or tampon printing or a spraying technique or a lithographic method or a deposition process,
- wherein the material for producing the at least one contact (20) is transparent and electroconductive.

2. The method according to claim 1, **characterized in that** an intermediate space between the at least one contact (20) and the data carrier body (24) is filled up with an electrically insulating material (22).

3. The method according to claim 1 or 2, **characterized in that** the data carrier body (24) is produced by means of a lamination method or an injection molding method.

4. The method according to any of the claims 1 to 3, **characterized in that** the recess (14) is produced before or during or after the production of the data carrier body (24).

5. The method according to claim 4, **characterized in that,** before the production of the data carrier body (24) by means of lamination, the recess (14) is produced by way of punching out individual foils in the region of the recess (14) before the lamination.

6. The method according to claim 4, **characterized in that,** before the production of the data carrier body (24) by means of lamination, the recess (14) is produced by a laminating plate used having an elevation in the shape of the recess (14) and this elevation pressing into at least one foil during the laminating process.

7. The method according to claim 4 or 5, **characterized in that** the recess (14) is produced by means of a heated punch (18), a laser or a milling cutter.

8. The method according to any of the preceding claims, **characterized in that** the outer dimensions of the chip (2) including the contacts (20) correspond maximally to the dimensions of the recess (14).

9. The method according to any of the preceding claims, **characterized in that** prior to the insertion of the chip (2) an adhesive is introduced into the recess (14) or applied to the chip (2) in order to fixate the chip (2) in the data carrier body (24).

10. The method according to any of the preceding claims, **characterized in that** a surface of the at least one contact (20) is disposed in a plane with the surface of the data carrier body (24) or is disposed below or above the surface of the data carrier body (24).

11. The method according to any of the preceding claims, **characterized in that** an intermediate space between at least one contact (20) and the data carrier body (24) is so filled up with an insulating material (22) that a level surface is formed with the surface of the data carrier body (24).

12. The method according to any of the preceding claims, **characterized in that** an antenna coil is printed on the data carrier body (24).

13. A chip card (26) which was produced in accordance with a method according to claim 1 to 12.

## Revendications

1. Procédé de fabrication d'un support de données portable (26) ayant une puce (2), cependant que :
- un corps de support de données (24) est fabriqué,
- au moins un renfoncement (14) est généré dans le corps de support de données (24),
- la puce (2) est insérée dans le renfoncement (14),
- au moins un contact (20) est créé, lequel se trouve à la surface du corps de support de données (24), et respectivement un contact (20) a une liaison électriquement conductrice avec respectivement une couche (6) électriquement conductrice qui est appliquée sur la puce (2) et sur laquelle le contact (20) est agencé, cependant que, entre les connexions de la puce (2), il n'y a pas de liaison électriquement conductrice,
**caractérisé par les étapes que**
- sur la surface de la puce (2), au moins une couche (6) électriquement conductrice est appliquée par-dessus au moins une connexion (4) de la puce (2), de telle sorte que, entre la couche (6) appliquée et la connexion (4) de la puce (2), il y a une liaison électriquement conductrice, cependant que la surface de la couche (6) appliquée est plus grande que la surface de la connexion (4) de la puce (2), cependant que, entre les connexions (4) de la puce (2), il n'y a, à la surface, pas de liaison électriquement conductrice,
- cependant que le au moins un contact (20) se trouvant à la surface du corps de support de données (24) est généré au moyen d'une sérigraphie ou d'une tampographie ou d'une technique de pulvérisation ou d'un procédé lithographique ou d'un processus de déposition,
- cependant que le matériau utilisé pour la génération du au moins un contact (20) est transparent et électriquement conducteur.

2. Procédé selon la revendication 1, **caractérisé en ce qu'**un espace intermédiaire entre le au moins un contact (20) et le corps de support de données (24) est rempli avec un matériau (22) électriquement isolant.

3. Procédé selon la revendication 1 ou 2, **caractérisé en ce que** le corps de support de données (24) est fabriqué au moyen d'un procédé de laminage ou d'un procédé de moulage par injection.

4. Procédé selon une des revendications de 1 à 3, **caractérisé en ce que** le renfoncement (14) est généré avant ou pendant ou après la fabrication du corps de support de données (24).

5. Procédé selon la revendication 4, **caractérisé en ce que,** avant la fabrication du corps de support de données (24) par laminage, le renfoncement (14) est généré, ce qui a lieu **en ce que** des films distincts sont, dans la zone du renfoncement (14), estampés avant le laminage.

6. Procédé selon la revendication 4, **caractérisé en ce que,** avant la fabrication du corps de support de données (24) par laminage, le renfoncement (14) est généré, ce qui a lieu **en ce qu'**une tôle de laminage utilisée comporte une protubérance de la forme du renfoncement (14) et presse cette protubérance dans au moins un film lors de l'opération de laminage.

7. Procédé selon selon la revendication 4 ou 5, **caractérisé en ce que** le renfoncement (14) est généré au moyen d'une étampe (18) chauffée, d'un laser ou d'une fraise.

8. Procédé selon une des revendications précédentes, **caractérisé en ce que** les dimensions extérieures de la puce (2), y compris les contacts (20), correspondent au maximum aux dimensions du renfoncement (14).

9. Procédé selon une des revendications précédentes, **caractérisé en ce que,** avant l'insertion de la puce (2), une colle est introduite dans le renfoncement (14) ou appliquée sur la puce (2) afin de fixer la puce (2) dans le corps de support de données (24).

10. Procédé selon une des revendications précédentes, **caractérisé en ce qu'**une surface du au moins un contact (20) se trouve dans un plan avec la surface du corps de support de données (24) ou se trouve au-dessous ou au-dessus de la surface du corps de support de données (24).

11. Procédé selon une des revendications précédentes, **caractérisé en ce qu'**un espace intermédiaire entre au moins un contact (20) et le corps de support de données (24) est rempli de telle façon avec un matériau (22) isolant qu'une surface en un plan avec la surface du corps de support de données (24) est engendrée.

12. Procédé selon une des revendications précédentes, **caractérisé en ce qu'**une bobine d'antenne est imprimée sur le corps de support de données (24).

13. Carte à puce (26), laquelle fut fabriquée suivant un procédé selon les revendications de 1 à 12.
